# EUROPEAN PATENT APPLICATION

(11) **EP 3 614 319 A1**
(43) Date of publication of application: **26.02.2020**
(21) Application number: 18189770.3
(22) Date of filing: 20.08.2018
(51) Int. Cl.: G06Q 10/06

(54) **TRACKING EXECUTION OF AN INDUSTRIAL WORKFLOW OF A PETRI NET**

(71) Applicant: Siemens Aktiengesellschaft, 80333 München (DE)
(72) Inventor: Cuellar, Jorge, 82065 Baierbrunn (DE); Kasinathan, Prabhakaran, 81549 München (DE)

(57) **Abstract**

An object of the present application is to provide a method of tracking execution of an industrial workflow modeled by a transfer of a token from a first place to a second place of a Petri net. Hereby, the first place and the second place of the Petri net are separated by a transition. The method comprises Publishing availability of the transfer at a distributed database. The method further comprises Determining whether a request for executing the transfer is received by the transition. The method further comprises selectively Executing the transfer of the token depending on the request. The method further comprises Publishing execution of the transfer of the token to the distributed database.

## Description

### TECHNICAL FIELD

Various embodiments of the invention enable a tracking execution method of an industrial workflow modeled by a token from a first place to a second place of a Petri net.

### BACKGROUND

In order to ensure secure and efficient processes in logistics and industry, modeling of corresponding industrial workflows by network structures is a commonly used approach. As an example, such a modeling approach may mitigate temporal manufacturing overloads and may secure an operable sequence in manufacturing the respective industrial product.

Due to a user-friendly visualization of industrial workflows, Petri nets are considered advantageous and are therefore widely used in the industrial environment. Hereby, manipulation of an object by the industrial workflow can be modeled by transferring a token in between different places of the Petri net. This transfer of the token can be controlled by a transition of the Petri net arranged in between these places.

However, in case a manipulator is capable of taking over control over such a transition, the modeling of the industrial workflow modeling may be mismanaged without indicating such a misbehavior to the user. As a matter of consequence, long-term misinterpretations of an industrial workflow may occur, which may endanger industrial manufacturing procedures.

Apart from this, documents US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 2891266 B1, EP 2961091 A1, EP 2961093 A1, EP 3028140 B1, EP 2930610 B1, EP 2940620 B1, EP 2899714 A1, EP 2981926 A0, EP 3125492 B1, EP17195125, EP17211075, EP18178316, EP18156084, EP18151345, EP18167702, EP18153594, EP18162050, EP18178498, EP18152117, EP18150133, EP18169145, EP17210647, EP18150146, EP18167486, EP18168670, EP18162049, EP17203819, EP18157168, EP18169421, EP17210253, EP17205224, EP18169269, EP18169254, EP17210288, EP18153025, EP17200614, EP18156308, EP17201758, EP18156511, EP18159485, EP17203573, EP 17175275, EP17186826, WO 2018069271 A1, PCT/EP2017/082508, EP17179823, WO 2017050348 A1, WO 2018068965 A1 and US 8 843 761 B2 are known to a skilled person.

### SUMMARY

Therefore, there is a demand for means ensuring a modeling, which represents an industrial workflow in a preferably appropriate manner.

It is an object of the present disclosure to provide means for ensuring a mathematical modeling, which represents an industrial workflow in a preferably appropriate manner.

A method of tracking execution of an industrial workflow occurring in a petri net, a transition adapted to enable the respective workflow in the Petri net as well as the corresponding Petri net are provided. Further embodiments are defined in the dependent claims.

According to an embodiment, a method of tracking execution of an industrial workflow modeled by a transfer of a token from a first place to a second place of a Petri net is disclosed. Herein, the first place and the second place of the Petri net are separated by a transition. According to this, the method comprises a) Publishing availability of the transfer at a distributed database, b) Determining whether a request for executing the transfer is received, c) selectively Executing the transfer of the token depending on the request and d) Publishing execution of the transfer of the token to the distributed database.

Also, a computer program product and a computer program and a computer-readable storage medium comprising program code that is executable to perform said method of tracking execution of the industrial workflow is provided.

Such an approach is based on the finding that a community related to the distributed database may receive information with respect to availability intervals, in which a transfer of a token may come into consideration. Therefore, token transfers, which do not comply with these availability intervals, may be identified easily. Additionally, since the method provides for publishing token transfers to the distributed database, a plurality of users related to the distributed database may evaluate whether the token transfer is considered trustable or rather subject to manipulations. Since the users related to the network underlying the distributed database may be in possession of different kind of information, these user may evaluate different aspects with respect to the reliability of the token transfer, thereby a probability of identifying a manipulated token transfer may further be improved.

According to another embodiment, a device is disclosed, which is adapted to enable a tracking execution of an industrial workflow modeled by a transfer of a token from a first place to a second place of a Petri net. Herein, a transition is configured to separate the first place and the second place of the Petri net. The device comprises a first publication unit, which is adapted to publish an availability of the transfer at a distributed database. The device further comprises a determination unit, which is adapted to determine whether a request for executing the transfer is received. The device further comprises an execution unit, which is adapted to selectively execute the transfer of the token depending on the request. The device further comprises a second publication unit, which is adapted to publish execution of the transfer of the token to the distributed database.

The units may be implemented in hardware and/or software. For example, the units may be implemented by software modules. For example, the device may be implemented by a computing processor.

For example, the request for executing may be received from a third party that is interested in the transfer. For example, the request for executing may be received at the distributed database. For example, the transition can execute the transfer upon receiving the request.

Such an approach provides for technical means, based on which advantages of the method outlined above may be achieved in a preferably simple and efficient manner.

According to another embodiment, a Petri net is disclosed, which is adapted for an exchange of data with a distributed database. The Petri net comprises a transition according to any of the embodiments discloses herein. The Petri net further comprises a first place, which is adapted to receive a token. The Petri net further comprises a second place. Hereby, the first place is adapted to transfer the token to the second place via the transition.

Such an approach enables to achieve the advantages of the transition outlined above by means of providing an appropriate environment.

A workflow within the meaning of the present disclosure may refer to a representation of an organized activity in a network environment. The workflow may comprise a sequence of operations executable in the network environment. The workflow may comprise a distribution of activities and services using different network paths and timing procedure. The workflow may comprise moving or manipulating an industrial object.

The workflow may be modeled by a Petri net. Moving or manipulating of an industrial object can be specifically modeled by a transfer of one or more tokens.

A token within the meaning of the present disclosure may refer to an entity transferable in a Petri Net. The token may be associated with an industrial object. The position of the token within the Petri Net may represent a state of the associated object, e.g., an ownership structure of the associated object. Hereby, modifications in such an ownership structure may be represented by transferring the token in the Petri net. The admissibility of a token transfer in such a Petri net may be controlled by a transition.

A Petri net within the meaning of the present disclosure may refer to a mathematical model based on which tracking of an industrial workflow in a network environment may be executed. A Petri net can be implemented by a directed bipartite graph, in which the nodes represent the transitions and places. Directed connections, so-called arcs, are typically used describe which places are pre- and/or postconditions for which transitions. The arcs connect a place and a transition, or a transition and a place. Arcs typically do not connect two places or two transitions. Hereby, marks implemented by the tokens may be used in order to indicate events which model the industrial workflow. In such a Petri net, a token may be transferred in between different places. Hereby, admissibility of the respective token transfers may be controlled by the transitions.

A transition within the meaning of the present disclosure may refer to a node in a Petri net, which may be adapted to control the transfer of a token in between different places. For doing so, the operation of the transition may be published to a distributed database. The transition may be adapted to execute token transfer control based on depositing at least one criterion in a contractual precondition, based on which admissibility and inadmissibility of the respective token transfer may be determined.

A distributed database within the meaning of the present disclosure may refer to a database in which not all storage devices are attached to a common processor. Instead, such a distributed database may be separated to different network nodes within a corresponding network. Hereby, the distributed database may be configured as a Blockchain based database.

In an embodiment of the method, the Petri net comprises a plurality of second places, wherein the transfer of the token is executed to a specific one of the plurality of second places determined based on the request.

Thereby, a receptor of the token to be transferred may be determined based on requests received by users related to the distributed database. As an example, a specific user related to the distributed database that delivers a request corresponding to a best monetary offer, may determine a specific second place for receiving the token. Thus, the method enables secure public sale means to a community.

In another embodiment, the method further comprises linking publication of the execution of the transfer with publication of the availability of the transfer at the distributed database.

Such a correlation of a published availability for a token transfer during a first time interval and a published execution of a token transfer during a second time interval may further improve the identifiability of manipulated workflow modeling. Thus, such an approach may further improve the creditability of a modeled industrial workflow.

In another embodiment of the method, the transition is configured to selectively execute the transfer further depending on a contractual precondition, wherein the method further comprises a) publishing the contractual precondition at the distributed database, and b) determining whether the request fulfills the contractual precondition.

Thereby, in advance to publishing the execution of the token transfer, conditions underlying the respective token transfer execution are published in the distributed database. A user, who receives both kind of information delivered in the distributed database, can thereby easily examine, whether the token transfer fulfils the condition published in advance. Thus, a user related to the distributed database can easily identify irregularities when comparing this information published to the distributed database, and hence can identify manipulation activities related to the Petri net.

In another embodiment of the method, the distributed database is a Blockchain based database comprising at least one common blockchain.

Due to the specific encryption mechanism of the blockchain using appropriate cryptographic means, information related to the Petri net, which has been published in the distributed database, can be stored in a tamper-proof manner. Thus, creditability of the respective Petri net information can been further improved.

In another embodiment of the method, the common blockchain is a permissioned blockchain.

Thereby, access to the distributed database may be restricted to preferably trustable participants. In this manner, risk of manipulation of the distributed database itself may further be reduced.

In another embodiment of the method, the availability of the transfer is published in a first data block of the common blockchain, wherein the execution is published in a second data block of the common blockchain, wherein the second data block is chained with the common blockchain at a later point in time than the first data block.

Thereby, in advance to publishing the execution of the token transfer in the blockchain, the availability of the transfer may be published in the blockchain. A user, who receives both kind of information delivered in the distributed database, can thereby correlate these information in order to investigate, whether the Petri net might be manipulated. By means of the blockchain structure used for storing this information in the distributed database, the risk of a potential manipulation of this information published in the respective data blocks of the distributed database is thereby significantly reduced.

Also, the blockchain can be used for advertising to a number of third-parties the availability of the transfer.

In another embodiment of the method, the contractual precondition is published in the second data block.

Thereby, the contractual precondition may be published twice, namely at a first time interval referring to the first data block and at a second time interval referring to the second data block. By comparing the contractual precondition published during different time intervals, users related to the distributed database may identify manipulations related to contractual precondition in a preferably easy manner.

In an embodiment of the method, the contractual precondition is a Smart contract implemented in a first data block of the common blockchain.

In another embodiment of the method, the first place and the second place of the Petri net are additionally separated by a further transition, wherein the transition and the further transition are arranged in a serial arrangement with respect to the first place and the second place, wherein the further transition is configured to selectively execute the transfer further depending on a further contractual precondition, and wherein the method further comprises a) Publishing the further contractual precondition at the distributed database and b) Determining whether the request fulfills the further contractual precondition.

Thereby, the method also improves the identification of manipulations related to a Petri net in case that the Petri net exhibits a different and even more complex configuration. Thus, the method comprises an improved flexibility and may be applicable independent from the specific appearance of the Petri net.

In another embodiment, the device is adapted to enable the execution of the method according to any of the embodiments disclosed herein.

Thereby, technical means are provided based on which advantageous aspects of the present disclosure may be implemented in a preferably simple and efficient manner.

A contractual precondition within the meaning of the present disclosure may refer to any conditions associated with execution of a transfer by a transition of a Petri net, which are indicative of whether a token transfer is admissible or inadmissible. Hereby, the deposited condition may be compared with a request received by the distributed database.

A blockchain within the meaning of the present disclosure may refer to a successively extendable entity for storing data based on cryptographic means. Hereby, the blockchain may comprise a plurality of data blocks, wherein the blockchain may be extended by chaining a new data block to an existing blockchain comprising a plurality of data blocks. Such a blockchain may be implemented in a distributed database.

A data block within the meaning of the present disclosure may refer to a storage entity, which may be chained and/or which may be configured chainable with a blockchain. Such a data block may comprise transactions and a hash value, adapted to chain the data block with at least one further data block of an existing blockchain.

The above summary is merely intended to give a short overview over some features of some embodiments and implementations and is not to be construed as limiting. Other embodiments may comprise other features than the ones explained above.

### BRIEF DESCRIPTION OF THE DRAWINGS

The above and other elements, features, steps and characteristics of the present disclosure will be more apparent from the following detailed description of embodiments with reference to the following figures:
- Figure 1: schematically illustrates a Petri net according to various examples;
- Figure 2: schematically illustrates a Petri net according to various examples;
- Figure 3: schematically illustrates a flowchart of a method of tracking execution of an industrial workflow of a Petri net according to various examples;
- Figure 4: schematically illustrates a flowchart of a tracking execution method of an industrial workflow of a Petri net according to various examples;
- Figure 5: schematically illustrates a distributed database comprising a common blockchain according to various examples; and
- Figure 6: schematically illustrates a transition of a Petri net according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

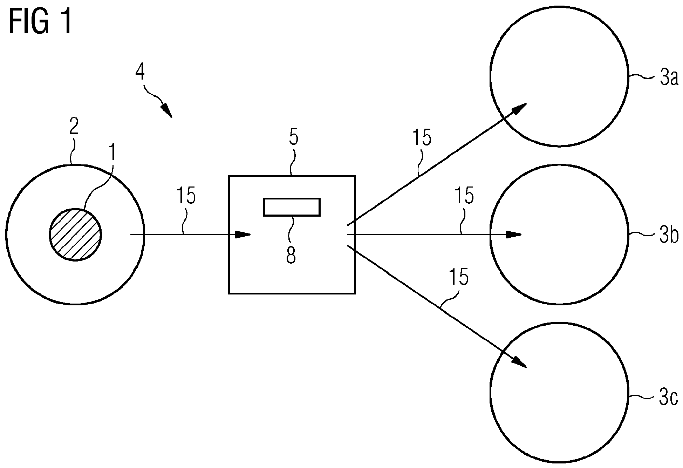

Figure 1 schematically illustrates a Petri net 4 according to various examples. The Petri net 4 may comprise a first place 2, which may be adapted to receive a token 1. The Petri net 4 may further comprise a plurality of second places 3a-3c, each of them may be adapted to receive the token 1, when a transfer of the token 1 may be accomplished. Although it is not depicted in Figure 1, it may also be intended that any of the first place 2 and the second places 3a-3c may be adapted to receive a plurality of tokens 1 at the same time. Such a transfer of tokens 1 may be accomplished using arcs 15.

A transfer of such a token 1 in such a Petri net 4 may be controlled by a transition 5. According to various examples, the transition 5 may comprise a contractual precondition 8, which may be adapted to determine at least one criterion depending on which the token 1 may or may not be transferred from the first place 2 to any of the second places 3a-3c.

It is also possible that the transition 5 is connected to multiple first places.

The Petri net 4 can be used to model an industrial workflow. For example, the manipulation or movement of one or more objects along the industrial workflow can be modeled by transferring the token 1 through the Petri net.

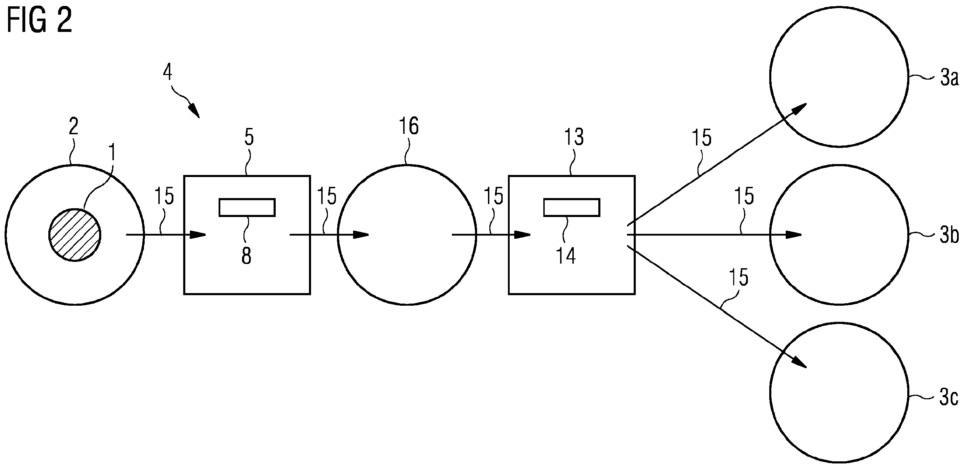

Figure 2 schematically illustrates a Petri net 4 according to various examples. In accordance with Figure 1, the Petri net 4 according to Figure 2 may comprise a first place 2, which may be adapted to receive a token 1, as well as a plurality of second places 3a-3c, each of them may be adapted to receive the token 1, when a transfer of the token 1 may be accomplished. Contrary to Figure 1, the Petri net 4 according to Figure 2 comprises two transitions, which may be indicated as transition 5 and further transition 13. According to the a workflow configuration defined by the first place 2, the plurality of second places 3a-3c and the arcs 15, the transition 5 and the further transition 14 may be configured in series. Hereby, the transition 5 may be adapted to control a transfer of the token 1 from the first place 2 to an intermediate place 16 and the further transition 13 may be adapted to control a transfer of the token 1 from the intermediate place 16 to the second place 3a-3c. According to the examples of Figure 2, it may be intended that the transition 5 and the further transition 13 may be configured identical or different. Hereby, conditions of transferring the token 1 via the transition 5 may be defined by the contractual precondition 8 and/or conditions of transferring the token 1 via the further transition 13 may be defined by the further contractual condition 14.

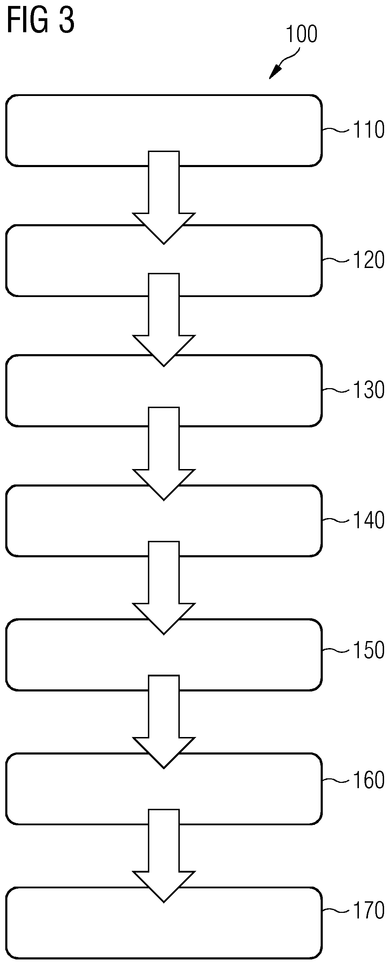

Figure 3 schematically illustrates a flowchart of a method 100 of tracking execution of an industrial workflow of a Petri net 4 according to various examples. Hereby, the tracking execution of the industrial workflow may be modeled by a transfer of a token from a first place 2 to a second place 3a-3c of the Petri net 4, wherein the first place 2 and the second place 3a-3c of the Petri net 4 may be separated by a transition 5. As an example, the method 100 may be executed by a processor that models the Petri net 4, which is depicted in Figure 1, and which comprises a single transition 5.

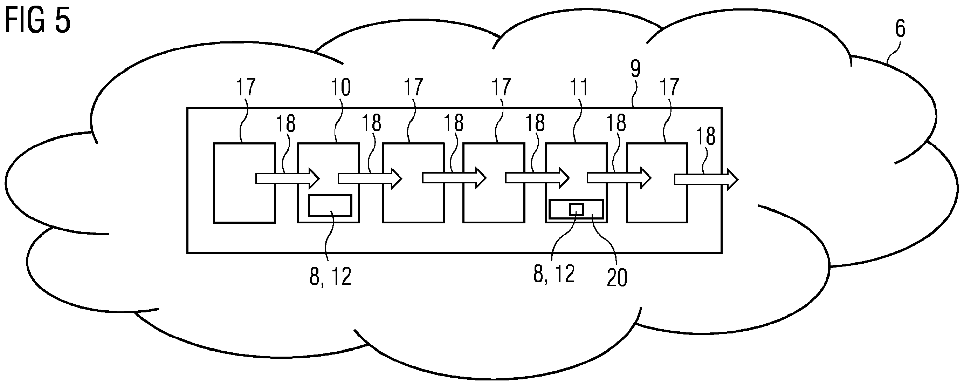

At 110, availability of the transfer may be published at a distributed database 6. Hereby, the distributed database 6 may be a Blockchain based database comprising at least one common blockchain 9, see Figure 5. In such a situation, the common blockchain 9 may be a permissioned blockchain.

In certain cases, the transition 5 may be configured to selectively execute the transfer further depending on a contractual condition 8. Then, at 120, the contractual precondition 8 may be published at the distributed database 6.

At 130, a request 7 for executing the transfer may be received by the transition 5.

In a case, in which the transition 5 may be configured to selectively execute the transfer further depending on a contractual condition 8, it may then, at 140, be determined whether the request fulfills the contractual precondition 8. At 150, the transfer of the token 1 depending on the request 7 may be selectively executed. In case that the Petri net 4 comprises a plurality of second places 3a-3c, the transfer of the token may then be executed to a specific one of the plurality of the second places 3a-3c determined based on the request.

At 160, execution of the transfer of the token 1 may be published to the distributed database.

At 170, publication of the execution of the transfer may be linked with publication of the availability of the transfer at the distributed database.

According to certain examples, see Figure 5, in which the distributed database 6 comprises a common blockchain 9, the availability of the transfer may be published in a first data block 10 of the common blockchain 9 and the execution may be published in a second data block 11 of the common blockchain 9. Hereby, the second data block 11 may be chained with the common blockchain 9 at a later point in time than the first data block. Further, the contractual precondition 8 may be published in the second data block 11 and/or the contractual precondition may be a Smart contract 12 implemented in a first data block 10 of the common blockchain 9.

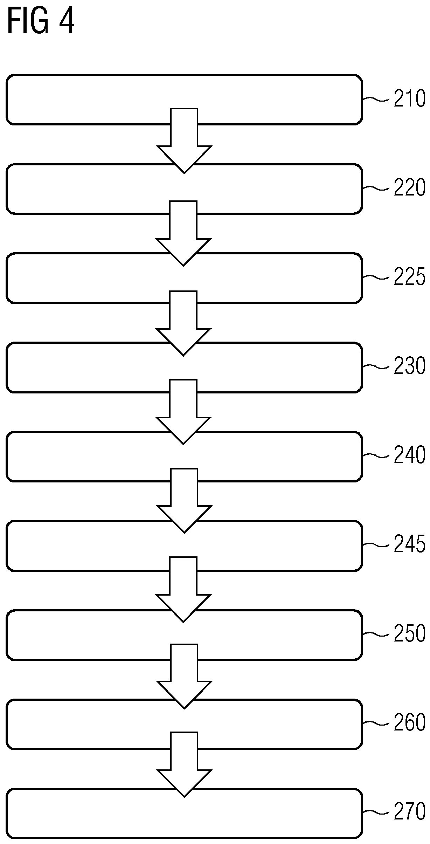

Figure 4 schematically illustrates a flowchart of a method 200 of tracking execution of an industrial workflow of a Petri net 4 according to various examples. The method 200 may be executed by a processor that models a Petri net 4 according to Figure 2, which comprises the transition 5 and the further transition 13. The method 200 may be based on the method 100 according to Figure 3, but may comprise additional specifications. These additional specifications may be based on a certain configuration, based on which the first place 2 and the second place 3a-3c of the Petri net 4 may be additionally separated by a further transition 13, wherein the transition 5 and the further transition 13 may be configured in a serial arrangement with respect to the first place 2 and the second place 3a-3c. According to method 200, references 210, 220, 230, 240, 250, 260 and 270 may correspond to references 110, 120, 130, 140, 150, 160 and 170, respectively.

According to method 200, the further transition 13 may be configured to selectively execute the transfer further depending on a further contractual precondition 14.

At 225, the further contractual precondition 8 may be additionally published at the distributed database 6.

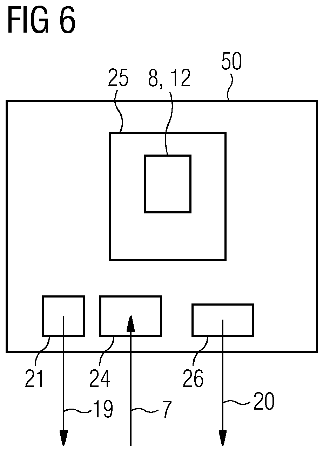

At 245, it may further be determined whether the request 7, see also Figure 6, fulfills the further contractual precondition 8.

Figure 5 schematically illustrates a distributed database 6 configured as a Blockchain based database, which comprises a common blockchain 9 according to various examples. The Blockchain based database may be realized by a Blockchain network comprising a plurality of network nodes, wherein at least some of these network nodes enable users participating the network.

The common blockchain 9 according to claim 5 may be composed by means of successively adding new blocks to the existing common blockchain 9. Hereby, at least some of the blocks may be based on information received by the transition 5 of the Petri net 4, such as the Petri net 4 depicted in Figure 1.

According to Figure 5, the common blockchain 9 may comprise a plurality of blocks 10, 11, 17 chained by suitable chaining means 18, such as hash values. Based on such an approach, linear chaining of the blocks 10, 11, 17 may be accomplished. The common blockchain 9 according to Figure 5 comprises further blocks 17, which are not provided to include information with respect to the Petri net 4. In addition, however, the common blockchain 9 may comprise a first data block 10, in which the availability of the transfer of a token 1 of the Petri net 4 may be published. In addition, the common blockchain 9 may comprise a second data block 11, in which the execution of the token 1 may be published. In such a case, it may be provided that the second block 11 may be chained with the common blockchain 9 at a later point in time than the first data block 10.

As can be deduced from Figure 5, the first data block 10 may comprise a contractual precondition 8, which may be configured as a Smart contract 12. In addition, the second data block 11 may relate to a workflow information 20 and also comprise the contractual precondition 8 of the first data block, which may configured as a Smart Contract 12 as well.

Information included in the data blocks of the blockchain 9 or more generally stored by the distributed database 6 can be published to various third-parties. Thereby, it would be possible to advertise to the third parties, e.g., availability of the transfer of a token.

Figure 6 schematically illustrates a device 50 configured to model a Petri net 4 according to various examples. Hereby, the device 50 may be adapted to enable a tracking execution of an industrial workflow modeled by a transfer of a token 1 from a first place 2 to a second place 3a-3c of a Petri net 4 using arcs 15. A transition 5 may be configured to separate the first place 2 and the second place 3a-3c of the Petri net 4. The device 50 comprises a first publication unit 21, which may be adapted to transmit an availability information 19 of the transfer at a distributed database. The device 50 further comprises a determination unit 24, which may be adapted to determine whether a request 7 for executing the transfer is received. The device 50 may further comprise an execution unit 25, which may be adapted to selectively execute the transfer of the token 1 depending on the request 7. This may be based on the contractual precondition 8, which may be configured as a Smart Contract 12. The device 50 may further comprise a second publication unit 26, which may be adapted to publish execution of the transfer of the token 1, e.g., based on workflow information 20, to the distributed database 6.

As a general rule, various use cases are conceivable for the techniques described herein.

According to certain examples of the present disclosures, which are not depicted in the Figures, a party may announce a workflow and ask for third-party bidders by publishing it on distributed database 6. One simple use case could be the following: assume that a Company (A) announces the workflow (a) on the distributed database 6 and ask for bidders. Consider that workflow (a) contains specifications on how to perform the maintenance of some buildings that company C owns. The Contractors (i.e., the bidders) are able to read the workflow (a), place their bid or consent (encrypted such that only Company A can read) on the distributed database 6. After the bidding time expires, the winner is chosen either manually or automatically (using a transition contract). Published information and actions in the distributed database 6 such as the workflow (contract), bid, consent or agreement between parties provide transparency and accountability. Such techniques can be implemented by publishing the Petri Net based workflows on the BC.

According to some other certain examples of the present disclosure, the present disclosure may also be associated with Internet-of-Things applications based on the help of "Trusted Helpers". Trusted helpers may not be constrained, and therefore may be able to perform tasks that cannot be executed in resource constrained devices, such as checking the validity of BC and contracts, etc. Any handheld device such as a smartphone can act as a trusted helper as it may usually have more processing power, energy, etc. Such an approach may also be used in energy management, building technologies as well as mobility applications.

## Claims

1. A method (100, 200) of tracking execution of an industrial workflow modeled by a transfer of a token (1) from a first place (2) to a second place (3a-3c) of a Petri net (4), the first place (2) and the second place (3a-3c) of the Petri net (4) being separated by a transition (5), the method (100) comprising:
Publishing (110, 210) availability of the transfer at a distributed database (6),
Determining (130, 230) whether a request (7) for executing the transfer is received;
selectively Executing (150, 250) the transfer of the token (1) depending on the request (7); and
Publishing (160, 260) execution of the transfer of the token (1) at the distributed database (6).

2. The method (100, 200) of claim 1, wherein the Petri net (4) comprises a plurality of second places (3a-3c), wherein the transfer of the token (1) is executed to a specific one of the plurality of second places (3a-3c) determined based on the request (7).

3. The method (100, 200) of claim 1 or 2, further comprising:
Linking (170, 270) publication (160, 260) of the execution of the transfer with publication (110, 210) of the availability of the transfer at the distributed database (6).

4. The method (100, 200) of any of the preceding claims,
wherein the transition (5) is configured to selectively execute the transfer further depending on a contractual precondition (8),
wherein the method (100, 200) further comprises:
Publishing (120, 220) the contractual precondition (8) at the distributed database (6),
Determining (140, 240) whether the request (7) fulfills the contractual precondition (8).

5. The method (100, 200) of any of the preceding claims, wherein the distributed database (6) is a Blockchain based database comprising at least one common blockchain (9).

6. The method (100, 200) of claim 5, wherein the common blockchain (9) is a permissioned blockchain.

7. The method (100, 200) of any of claims 5 and 6, wherein the availability of the transfer is published in a first data block (10) of the common blockchain (9), and wherein the execution is published in a second data block (11) of the common blockchain (9), the second data block (11) is chained with the common blockchain (9) at a later point in time than the first data block (10).

8. The method (100, 200) of claims 4 and 7, wherein the contractual precondition (8) is published in the second data block (11).

9. The method (100, 200) of claim 4 and claim 7 or 8, wherein the contractual precondition is a Smart contract (12) implemented in a first data block (10) of the common blockchain (9).

10. The method (100, 200) of any of claims 4, 8 and 9, wherein the first place (2) and the second place (3a-3c) of the Petri net (4) are additionally separated by a further transition (13), the transition (5) and the further transition (13) are arranged in a serial arrangement with respect to first place (2) and the second place (3a-3c), wherein the further transition (5) is configured to selectively execute the transfer further depending on a further contractual precondition (14),
wherein the method (100, 200) further comprises:
Publishing (225) the further contractual precondition (8) at the distributed database (6),
Determining (245) whether the request (7) fulfills the further contractual precondition (8).

11. A device (50), adapted to enable a tracking execution of an industrial workflow modeled by a transfer of a token (1) from a first place (2) to a second place (3a-3c) of a Petri net (4), a transition (5) being configured to separate the first place (2) and the second place (3a-3c) of the Petri net (4), wherein the device comprises:
a first publication unit (21) adapted to publish an availability of the transfer at a distributed database (6),
a determination unit (24) adapted to determine whether a request (7) for executing the transfer is received;
an execution unit (25) adapted to selectively execute the transfer of the token (1) depending on the request (7); and
a second publication unit (26) adapted to publish execution of the transfer of the token (1) at the distributed database (6).

12. The device (50) of claim 11, which is adapted to enable the execution of the method according to any of claims 2-10.

13. A computer program product comprising a non-transitory computer readable medium that stores computer executable code that when executed on a processor performs the method as claim in claim 10.

14. Computer program with program-code-means, which performs all method steps of any of claims 1 to 10, when the program is performed on a programmable computer and/or a digital signal processor.

15. Computer-readable storage medium with electronically readable control signals, which interact with a programmable computer and/or digital signal processor in a manner that all steps of the method according to any of claims 1 to 10 can be performed.
